# EUROPEAN PATENT APPLICATION

(11) **EP 1 298 475 A1**
(43) Date of publication of application: **02.04.2003**
(21) Application number: 01308248.2
(22) Date of filing: 27.09.2001
(51) Int. Cl.: G02B 6/42

(54) **A method of assembling opto-electrical arrangements and an assembly obtained thereby**

(71) Applicant: Agilent Technologies, Inc. (a Delaware corporation), Palo Alto, CA 94303 (US)
(72) Inventor: Gastaldi, Luigi, Fiano (TO) (IT); Scofet, Marco, 10086 Rivarolo C. se (TO) (IT)
(74) Representative: Coker, David Graeme

(57) **Abstract**

A method of assembling an arrangement including an opto-electronic component (5), an optical fiber (4) having a main axis (X4) and an end surface, as well as a mounting support (2) common for the opto-electronic component (5) and the optical fiber (4). The support (2) has a front surface (2a) with the opto-electronic component (5) mounted thereon and a groove (3) for receiving the fiber (4). The groove (3) has a reflective proximal end surface (3a) which is tilted with respect to the main axis (X4) of the fiber to generate a radiation propagation path between the fiber (4) and the opto-electronic component (5). The method includes the step of providing a mass of adhesive (6) fixing the fiber (4) to the support (2). The mass of adhesive (6) also ensures retention of the converter (5) onto the support (2) and is comprised of a refractive index-matching medium filling the propagation volume between the end of the fiber (4) and the opto-electronic component(5).

## Description

The present inventions relates to a method for assembling an opto-electrical arrangement according to the preamble of claim 1.

Such an arrangement is known e.g. from US-A-6 019 523.

A somewhat similar arrangement is disclosed in EP-A-1 033 596. In this latter document, the radiation propagation path between the opto-electronic component and the fiber is primarily defined by the end surface of the fiber, which is cut at an angle to the main axis of the fiber and polished to be rendered reflective.

Properly assembling such an arrangement requires securely and precisely mounting on a base support (typically a so-called silicon bench or SiOB) both the fiber and the opto-electronic component. Such a component usually includes e.g. a semiconductor laser source or a photodetector such as a semiconductor photodiode/phototransistor depending on whether the arrangement is intended to comprise a transmitter assembly or a receiver assembly, respectively. Also, proper transmission of radiation should be ensured e.g. by refractive index matching between the fiber and the opto-electronic component.

In current prior art solutions, the opto-electronic component (e.g. the photodetector) has a double side metalisation layer and gold-tin solder is used to fix the respective die onto the silicon bench. The fiber is then fixed and an index-matching medium, e.g. an adhesive is inserted between the fiber and the photo detector.

In other solutions, index matching between the fiber and the opto-electronic component is achieved by means of an index matching gel while a separate adhesive (such as an epoxy adhesive) is used to fix the fiber to the bench.

The object of the present invention is to provide a solution improved in terms of shorter times being required for assembling an opto-electrical arrangement of the type considered in the foregoing, while also ensuring optimum optical coupling and electrical connections, which is of paramount importance for high bit-rate operation, e.g. in the 10 Gbit/s range.

According to the present invention, such an object is achieved by means of a method having the features set forth in the annexed claims. The invention also relates to the assembly thus obtained.

Essentially, the invention provides for simultaneous assembly of the opto-electronic component (e.g. the photodiode) and the fiber on the optical bench using an index-matching adhesive. In that way, by means of a one-step process three results can be simultaneously achieved, namely: fixing the opto-electronic component to the optical bench, fixing the fiber to the optical bench, and reducing optical back-reflection by interposing a refractive index-matching medium (the adhesive itself) between the fiber and the opto-electronic component.

Optical coupling is obtained by means of passive alignment allowing an accuracy of a few microns to be achieved. The photodiode is aligned to the silicon bench using fiducials and markers between the silicon bench and the photodiode, while the fiber is accurately aligned by locating it in a V-groove preferably obtained by chemical etching.

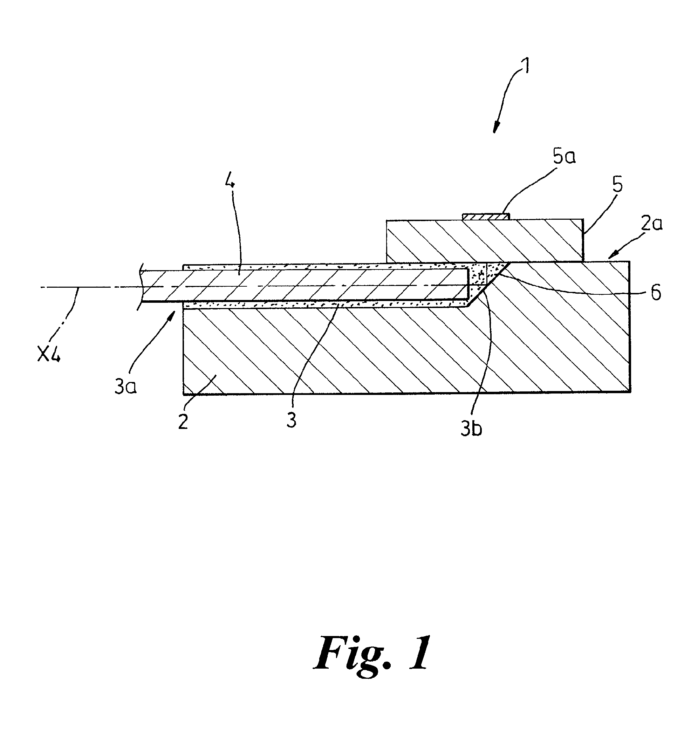

The invention will now be described, by way of example only, by referring to the enclosed figure of drawing which represents a cross-sectional view of an assembly obtained by means of the invention.

In the drawing, reference numeral 1 designates overall an optical assembly (or sub-assembly) of the type described e.g. in US-A-6 019 523.

Optical assembly 1 includes a support member 2 essentially comprised of so-called silicon bench or SiOB. Silicon bench 2 is preferably in the form of a thin plate having an upper surface 2a where one or more grooves 3 are provided to receive one or more optical fibers 4, respectively.

Groove or grooves 3 are preferably produced by chemical etching according to crystallographic axes.

Further details concerning the choice of materials and components for such assemblies can be derived from the prior art documents cited in the introductory portion of the description.

The or each groove 3 (in the following reference will be made for the sake of simplicity to a single-groove arrangement) thus includes a distal end 3a and a proximal end 3b which is in the form of a metallized surface lying in a plane tilted with respect to the main axis X4 of fiber 4.

Associated with bench 2 at a position generally facing (i.e. above) reflecting end surface 3b of groove 3 is an opto-electronic component 5 having an active area designated 5a.

As used herein, the designation "opto-electronic component" is intended to mean both an optical/electrical converter such as a photodiode and an electro/optical converter such as semiconductor laser source.

In the case of a receiver assembly, component 5 is a photodetector such as a photodiode and incoming optical radiation propagating along axis X4 of fiber 4 is reflected at surface 3b to impinge onto active area 5a of photodetector 5.

Conversely, in the case of a transmitter assembly, optical radiation generated at active area 5a is reflected at surface 3a to be propagated along the main axis X4 of fiber 4.

In the presently preferred embodiment of the invention, assembling the arrangement shown in the drawing provides for fiber 4 being located (inserted) in groove 3, while a refractive index-matching adhesive 6 such as epoxy, acrilate or silicone adhesive is applied to groove 3.

Adhesive 6 is applied in a quantity such that the space or volume included between the end of fiber 4 and reflective surface 3b is completely filled, while also ensuring that a layer of such adhesive is formed extending over surface 2a at the location where opto-electronic component 5 is located.

Component 5 is applied onto surface 2a (either before or, preferably, after fiber 4 is located in groove 3) and the assembly thus formed is subject to current passive alignment steps in order to ensure proper and accurate positioning of fiber 4 and component 5 with respect to silicon bench 2 and - more to the point - reflective surface 3b.

Adhesive 6 is preferably selected as one having curing/hardening times in the range of 30 to 90 seconds. Such a value represents a judicious trade-off between having sufficient time available for properly aligning the components and avoiding that too much time should be waited before the assembly can be manipulated without any risk that the components may become undesirably displaced with respect to the optimum alignment position(s).

Of course, the basic principle of the invention remaining the same, the details and embodiments may vary with respect to the exemplary embodiment described and shown without departing from the scope of the invention as defined by the annexed claims. This applies primarily, but not exclusively, to the choice of adhesive 6. In fact, the invention lends itself to be carried out by means of e.g. any adhesive adapted to ensure the required adhesive retention force between the material comprising bench 2 and the materials comprising fiber 4 and the surface of component 5 facing bench 2 while also ensuring the required refractive index-matching properties for propagation along the path between fiber 4 and component 5. Also, while the presently preferred embodiment of the invention provides for adhesive 6 being applied to groove 3 after fiber 4 has been located therein, an at least partial filling of adhesive 6 may be provided in groove 3 even before fiber 4 is inserted therein.

## Claims

1. A method of assembling an arrangement including at least one opto-electronic component (5), at least one optical fiber (4) having a main axis (X4) and an end surface, as well as a mounting support (2) common for said at least one opto-electronic component (5) and said at least one optical fiber (4), said support (2) having a front surface (2a) with said opto-electronic component (5) located in at least the vicinity thereof, said front surface (2a) having at least one groove (3) for receiving said fiber (4) therein, a reflective surface (3a) being provided which is tilted with respect to said main axis (X4) of the fiber to generate a radiation propagation path between said fiber (4) and said opto-electronic component (5), whereby a radiation propagation volume is jointly defined by said end surface of the fiber (4) and said opto-electronic component (5), **characterized in that** it includes the step of providing a mass of adhesive (6) fixing said fiber (4) to said support (2), said mass of adhesive (6) also ensuring adhesive retention of said opto-electronic component (5) onto said front surface (2a) of said support (2), wherein said adhesive is comprised of a refractive index-matching medium filling said propagation volume.

2. The method of claim 1, **characterized in that** said adhesive (6) is selected in the group consisting of epoxy, acrilate and silicone adhesives.

3. The process of either of claim 1 or claim 2, **characterized in that** said adhesive (6) has a curing/hardening time sufficient to enable passive alignment of said fiber (4) and/or said opto-electronic component (5) with respect to said support (2).

4. The method of claim 1, **characterized in that** said adhesive (6) has a curing/hardening time in the range of 30 - 90 seconds.

5. The method of any of the previous claims, **characterized in that** said adhesive (6) is filled in said groove (3) after said fiber (4) is located in said groove (3).

6. The method of any of the previous claims, **characterized in that** said opto-electronic component (5) is adhesively applied onto said surface (2a) of said support (2) after said fiber (4) is located in said groove (3).

7. An assembly including at least one opto-electronic component (5), at least one optical fiber (4) having a main axis (X4) and an end surface, as well as a mounting support (2) common for said at least one opto-electronic component (5) and said at least one optical fiber (4), said support (2) having a front surface (2a) with said opto-electronic component (5) located in at least the vicinity thereof, said front surface (2a) having at least one groove (3) for receiving said fiber (4) therein, a reflective surface (3a) being provided which is tilted with respect to said main axis (X4) of the fiber to generate a radiation propagation path between said fiber (4) and said opto-electronic component (5), whereby a radiation propagation volume is jointly defined by said end surface of the fiber (4) and said opto-electronic component (5), said assembly being assembled by means of the method of any of claims 1 to 6.
